# EUROPÄISCHE PATENTSCHRIFT

(11) **EP 3 911 474 B1**
(45) Veröffentlichungstag und Bekanntmachung des Hinweises auf die Patenterteilung: **08.01.2025**
(21) Anmeldenummer: 19828184.2
(22) Anmeldetag: 20.11.2019
(51) Int. Cl.: B23K 33/00, B23K 101/16, B23K 101/34

(54) **VERFAHREN ZUR BEARBEITUNG EINES BANDES**
METHOD FOR PROCESSING A STRIP
PROCÉDÉ DE TRAITEMENT D'UNE BANDE

(30) Priorität: 20.11.2018 AT 510152018
(43) Veröffentlichungstag der Anmeldung: 24.11.2021
(73) Patentinhaber: Berndorf Innovations und Technologie GmbH, 2560 Berndorf (AT)
(72) Erfinder: HAYDN, Markus, 2353 Guntramsdorf (AT); JAVIDI, Ataollah, 1220 Wien (AT); LEGRAS, Stephanie, 1180 Wien (AT)
(74) Vertreter: Burger, Hannes
(86) Internationale Anmeldenummer: PCT/AT2019/060394
(87) Internationale Veröffentlichungsnummer: WO 2020/102839

(56) Entgegenhaltungen:
- EP-A2- 1 847 330
- WO-A1-2016/123645
- WO-A1-95/29033
- US-A1- 2014 003 860

## Beschreibung

Die Erfindung betrifft ein Verfahren gemäß dem Oberbegriff von Anspruch 1.

Bei der Bearbeitung von Bändern, welche mit einer Beschichtung versehen sind, tritt das Problem auf, dass die Beschichtung der Bearbeitung im Weg steht. So ist es beispielsweise bei beschichteten Bändern, welche in weiterer Folge zu Endlosbändern geschlossen werden sollen, wichtig, dies ohne Beschädigung der Beschichtung durchzuführen. Um beispielsweise freie Enden eines derartigen Bandes miteinander zu verbinden, können diese auf einer der Beschichtung gegenüberliegenden beschichtungsfreien Seite des Bandkörpers miteinander verschweißt werden, was jedoch mit einem erheblichen Risiko einer Beschädigung der Beschichtung verbunden ist. Außerdem kann der Bandwerkstoff beim Schweißen durch die Beschichtung im Bereich der Schweißstelle legiert werden, wodurch seine Eigenschaften lokal stark verändert werden können.

Auch die Reparatur des Bandkörpers von beschichten Bändern gestaltet sich schwierig, da dieser üblicherweise nur von einer unbeschichteten Unterseite des Bandes frei zugänglich ist. Zudem ist es sehr schwierig und aufwändig Reparaturen an der Beschichtung selbst durchzuführen. Verfahren zum Verschweißen beschichteter Bleche sind aus der WO 9529033 A1 sowie der US 2014003860 A1 bekannt geworden. Die EP 1847330A2 hat die Herstellung eines rohrförmigen Hohlkörpers zum Gegenstand. Aus der WO2016123645 A1 (offenbarend den Oberbegriff des Anspruchs 1) ist ein Endlosband mit einer aufgeklebten Beschichtung bekannt geworden.

Aufgabe der vorliegenden Erfindung war es, die Nachteile des Standes der Technik zu überwinden und die Bearbeitung eines beschichteten Bandes zu verbessern und zu vereinfachen, wobei die Beschichtung des bearbeiteten Bandes als auch der Bandkörper selbst keine Beschädigungen erfahren soll.

Diese Aufgabe wird durch ein Verfahren der eingangs genannten Art erfindungsgemäß durch die Merkmale des kennzeichnenden Teils von Anspruch 1 gelöst.

Die Erfindung ermöglicht auf einfache Weise die Bearbeitung, beispielsweise im Rahmen einer Reparatur, eines Bandes auch von einer eine Beschichtung aufweisenden Oberfläche.

Durch die erfindungsgemäße Lösung ist auch die einfache Herstellung von einseitig oder beidseitig durchgehend beschichteten Endlosbändern möglich. An dieser Stelle sei darauf hingewiesen, dass in dem vorliegenden Zusammenhang unter Bearbeiten eines Bandes insbesondere die Reparatur eines Bandes in einem endlosen oder einem offenen Zustand als auch der Prozess des Endlosmachens eines Bandes verstanden wird.

Gemäß einer bevorzugten Variante der Erfindung kann der Bandkörper aus Metall hergestellt sein.

Als besonders vorteilhaft hat es sich herausgestellt, wenn die Beschichtung aus einem nichtmetallischen Material, insbesondere aus einem Kunststoff, beispielsweise einem Polytetrafluorethylen (PTFE), hergestellt ist.

Gemäß einer Variante der Erfindung, welche sich besonders zur Bearbeitung des Bandkörpers eignet, kann es vorgesehen sein, dass ein Boden der Vertiefung durch einen beschichtungsfreien Abschnitt der Oberfläche des Bandkörpers gebildet wird, wobei einander gegenüberliegende, die Vertiefung begrenzende Abschnitte der Beschichtung durch den beschichtungsfreien Abschnitt der Oberfläche des Bandkörpers voneinander getrennt sind.

Bei einer vorteilhaften Weiterbildung der Erfindung, welche sich besonders für die Herstellung von Endlosbändern eignet, kann es vorgesehen sein, dass in Schritt i) die Beschichtung auf die Oberfläche des Bandkörpers aufgebracht wird, wobei an quer oder schräg zu den Seitenflächen verlaufenden, freien Enden des Bandkörpers je ein Bereich der Oberfläche des Bandkörpers, der auf einer Seite von je einem freien Enden des Bandkörpers begrenzt wird, frei von der Beschichtung gehalten wird.

Weiters kann es vorgesehen sein, dass nach Schritt i) und vor Schritt ii) zur Herstellung der Vertiefung Stirnkanten der beiden frei von der Beschichtung gehaltenen, freien Enden aneinander zum Anliegen gebracht und miteinander verbunden werden, wodurch der Bandkörper zu dem Endlosband verbunden wird.

Weiters ist von Vorteil, wenn die beiden freien Enden miteinander unter Bildung einer Schweißnaht verschweißt werden.

Um eine gleichmäßige Schichtdicke bei Verwendung eines Sprühverfahrens zum Aufbringen des Materials der Beschichtung in Schritt ii) zu erzielen, ist es erfindungsgemäß vorgesehen dass die Beschichtung zur Mitte der Vertiefung hin abgeschrägt und/oder unter Bildung von jeweils eine Oberseite und an diese anschließende Stirnseiten aufweisenden Stufen abgestuft wird, wobei im Fall eines Abstufens ein Niveau der Oberseiten der Stufen bezogen auf die Oberfläche des Bandkörpers von einem Rand der Vertiefung zu einer Mitte der Vertiefung hin abnimmt. Durch diese Variante der Erfindung kann gewährleistet werden, dass nach einem Beschichten der bearbeiteten Stelle sowohl ein zentraler mittlerer Bereich der Vertiefung als auch deren Randbereiche eine annähernd gleiche Schichtdicke aufweisen, insbesondere wenn bei Verwendung eines Sprühverfahrens (Spray Coating), eine Menge von Beschichtungsmaterial innerhalb eines auf die zu beschichtende Stelle gerichteten Strahls aus Beschichtungsmaterial radial zur Mittelachse des Strahls abnimmt. Auch bei Verwendung eines Verfahrens, bei welchem das Beschichtungsmaterial aufgegossen wird, kann das Material nach Befüllen des mittleren Teils der Vertiefung bei dieser Variante der Erfindung kontrolliert die Randbereiche erreichen und sich in der Vertiefung verteilen, sodass eine annähernd gleichmäßige Dicke der Beschichtung erzielt wird. Zudem kann durch diese Variante der Erfindung gewährleistet werden, dass auf eine Abdeckung benachbarter Bereiche des zu bearbeitenden Bereichs verzichtet werden kann, da durch die Abstufung auch ein ungewollter Übertritt von Material in benachbarte Bereiche verhindert oder zumindest deutlich reduziert werden kann. Dies ist von besonderen Vorteil, da es durch die Abdeckung zu Beschädigungen der Beschichtung kommen kann.

Bei einer vorteilhaften Ausführungsform, welche sich für die Reparatur von bestehenden Bändern eignet, kann es vorgesehen sein, dass zwischen Schritt i) und Schritt ii) die Beschichtung unter Bildung zumindest einer Schrägfläche und/oder von Stufen abgetragen wird, bis die Oberfläche des Bandkörpers frei liegt, und hierauf der Bandkörper, insbesondere durch Schleifen und/oder Herausschneiden von Teilen des Bandkörpers und Einsetzen von Material in den Bandkörper, bearbeitet wird.

Zum besseren Verständnis der Erfindung wird diese anhand der nachfolgenden Figur näher erläutert.

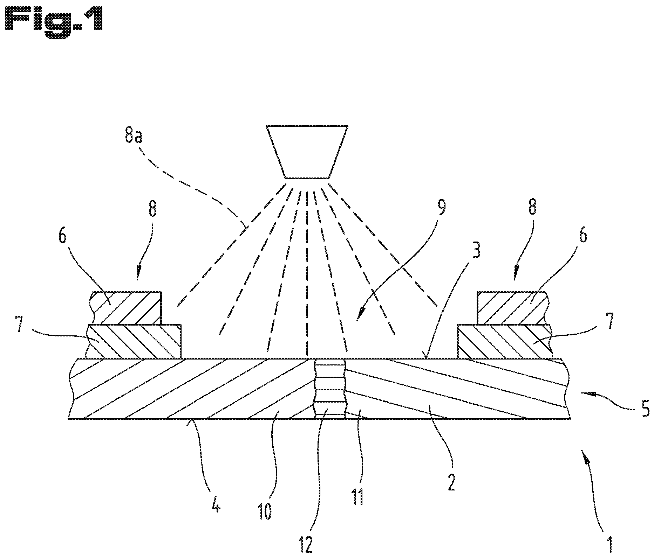

- Fig. 1: zeigt in stark vereinfachter, schematischer Darstellung einen Querschnitt durch ein beschichtetes Band, während der erfindungsgemäßen Bearbeitung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Gemäß Fig. 1 kommt bei dem erfindungsgemäßen Verfahren ein Band 1 mit einem Bandkörper 2 zum Einsatz, welcher eine erste Oberfläche 3 und eine zweite Oberfläche 4 aufweist. Bevorzugt ist der Bandkörper 2 aus Metall hergestellt.

Die erste Oberfläche 3 und die zweite Oberfläche 4 sind durch Seitenflächen 5 miteinander verbunden, wobei jede der Seitenflächen 5 kleiner sind als jede der Oberflächen 3, 4. In dem dargestellten Ausführungsbeispiel ist eine der Oberflächen 3, 4 des Bandes 1, nämlich die Oberfläche 3 mit einer hier zwei Schichten 6, 7 aufweisenden Beschichtung 8 beschichtet. Die Beschichtung 8 kann beispielsweise durch Aufsprühen, Aufgießen eines Materials bzw. mehrerer unterschiedlicher Materialien 8a oder durch Lackieren mit dem Material bzw. den Materialien 8a erfolgen. Abweichend von der Darstellung in Fig. 1 kann die Beschichtung 8 auch auf beiden Oberflächen 3 und 4 aufgetragen sein. Zudem kann die Beschichtung 8 nur eine einzige Schicht oder auch mehr als zwei Schichten, beispielsweise drei, vier oder fünf bzw. beliebig viele Schichten, aufweisen. Zwischen der untersten Schicht 7 und der Oberfläche des Bandkörpers 2 kann auch eine oder mehrere Schichten von Haftvermittlern aufgebracht werden. Im Bedarfsfall kann der Haftvermittler auch zwischen den Schichten 6 und 7 und/oder zwischen anderen aufeinanderfolgenden Schichten der Beschichtung 8 aufgebracht sein. Bevorzugt besteht die Beschichtung 8 bzw. die Schichten 6, 7 aus einem nichtmetallischem Material bzw. nichtmetallischen Materialien 8a, bei dem bzw. denen es sich um einen Kunststoff, insbesondere um ein Polytetrafluorethylen (PTFE) handelt. Die Materialien 8a der einzelnen Schichten 6, 7 der Beschichtung können voneinander abweichen und unterschiedlich sein, so kann die Schicht 6 aus einem ersten Material und die Schicht 7 aus einem zweiten Material bestehen. Allerdings ist es auch möglich, dass die Schichten 6 und 7 aus dem gleichen Material 8a gebildet sind.

In einem Schritt i) wird um einen zu bearbeitenden Bereich des Bandes 1 eine die Beschichtung 8 unterbrechende Vertiefung 9, insbesondere in Form eines Spaltes, Lochs oder einer Aussparung, hergestellt. Die Herstellung der Vertiefung 9 kann auf unterschiedliche Weise erfolgen. So kann wie weiter unten beschrieben die Vertiefung 9 durch Abtragen von Material 8a der Beschichtung 8 beispielsweise im Rahmen einer Reparatur des Bandes 1 oder aber auch durch Verbinden freier Enden 10, 11 des Bandes 1 zu einem Endlosband erfolgen.

Die Vertiefung 9 wird von einander gegenüberliegenden Abschnitten der Beschichtung 8 begrenzt. Wie aus Fig. 1 weiters ersichtlich ist, kann ein Boden der Vertiefung 9 durch einen beschichtungsfreien Abschnitt der Oberfläche 3 des Bandkörpers 2 gebildet sein. Hierbei sind einander gegenüberliegende die Vertiefung 9 begrenzende Abschnitte der Beschichtung 8 durch den beschichtungsfreien Abschnitt der Oberfläche 3 des Bandkörpers 2 voneinander getrennt.

In Schritt i) kann die Beschichtung auf die Oberfläche 3 des Bandkörpers 2 aufgebracht werden, wobei an quer oder schräg zu den Seitenflächen verlaufenden, freien Enden 10, 11 des Bandkörpers 2 je ein Bereich der Oberfläche 3 des Bandkörpers 2, der auf einer Seite von je einem freien Ende 10, 11 des Bandkörpers 2 begrenzt wird, frei von der Beschichtung gehalten wird. Somit verbleibt der Bandkörper 2 in einem an die beiden freien Enden 10, 11 anschließenden Bereich unbeschichtet.

Nach dem Beschichten können zur Herstellung der Vertiefung 9 Stirnkanten der beiden frei von der Beschichtung gehaltenen, freien Enden 10, 11 aneinander zum Anliegen gebracht und miteinander verbunden werden, wodurch der Bandkörper 2 zu einem Endlosband verbunden wird. Bevorzugt erfolgt das Verbinden der beiden freien Enden 10 und 11 durch Verschwei-ßen, wodurch sich eine Schweißnaht 12 ergibt. Die Schweißnaht 12 kann weiterbearbeitet werden, beispielsweise durch Schleifen.

Wie aus Fig. 1 ersichtlich ist, kann die Beschichtung 8 zur Mitte der Vertiefung 9 hin abgestuft sein. Hierbei sind in der Beschichtung 8 Stufen ausgebildet. Die Stufen weisen jeweils eine Oberseite und eine an diese anschließende Stirnseite auf. In der hier dargestellten Ausführungsform wird die Oberseite der ersten Stufe durch die Oberseite der Schicht 6 gebildet, wobei die Stirnseite der ersten Stufe die Oberseite der Schicht 6 und die freie im Wesentlichen parallel zur Oberfläche 3 des Bandkörpers 2 verlaufende Oberfläche der Schicht 7 miteinander verbindet. Die soeben erwähnte Oberfläche der Schicht 7 stellt die Oberseite der zweiten Stufe dar, wobei die Stirnseite der zweiten Stufe die Oberseite der zweiten Stufe mit der Oberfläche 3 des Bandkörpers 2 verbindet.

Ein Niveau der Oberseiten der Stufen bezogen auf die Oberfläche 3 des Bandkörpers 2 nimmt von einem Rand der Vertiefung 9 zu einer Mitte der Vertiefung 9 hin ab. Alternativ zur Verwendung von Stufen könnte die Beschichtung 8 im Bereich der Vertiefung 9 auch abgeschrägt sein.

Zur Herstellung der Abstufung der Beschichtung 8 kann das Material bzw. die Materialien 8a schichtweise auf den Bandkörper 2 aufgetragen werden, wobei zuerst die Schicht 7 unter Aussparung eines Bereichs um die freien Enden 10 und 11 aufgetragen wird und hierauf die Schicht 6 auf die Schicht 7 aufgebracht wird.

Nach Bearbeitung des Bandes 1 in dem zu bearbeitenden Bereich, beispielsweise durch Aufoder Abtragen von Material auf oder von dem Bandkörper 2 oder durch Verschweißen der beiden Enden 10 und 11 wird in einem Schritt ii) die Vertiefung 9 mit einem gleichartigen Material bzw. gleichartigen Materialien 8a wie jenes bzw. jene der zumindest einen Schicht 6, 7 der Beschichtung 8 aufgefüllt. Das Auffüllen kann der Vertiefung 9 mit dem Material oder den Materialien 8a kann prozessbedingt teilweise, vollständig oder überhöht erfolgen, wobei es bei einem überhöhten Befüllen der Vertiefung 9 kommt es zu einem Übertritt von Material in benachbarte Bereiche der Beschichtung.

Entsprechend der Erfindung erfolgt das Auffüllen der Vertiefung 9 mit einem Sprühverfahren, bei welchem das Material oder die Materialien 8a auf den Bandkörper 2 aufgesprüht wird. Durch die in Fig. 1 dargestellte Abstufung der Beschichtung 8 lässt sich zum Auffüllen der Vertiefung 9 eine gleichmäßige Schichtdicke erzielen, da sich das Material oder die Materialien 8a von der Mitte der Vertiefung 9 gleichmäßig zu den Rändern hin verteilen kann bzw. können. Weiters kann auf eine Abdeckung von Randbereichen, die sich an den zu bearbeitenden Bereich anschließen verzichtet werden.

### Bezugszeichenaufstellung

- 1: Band
- 2: Bandkörper
- 3: Oberfläche
- 4: Oberfläche
- 5: Seitenfläche
- 6: Schicht
- 7: Schicht
- 8: Beschichtung
- 8a: Material
- 9: Vertiefung
- 10: Ende
- 11: Ende
- 12: Schweißnaht

## Patentansprüche

1. Verfahren zur Reparatur oder Herstellung eines Endlosbandes aus einem Band (1) mit einem Bandkörper (2), wobei der Bandkörper (2) eine erste Oberfläche (3) und eine zweite Oberfläche (4) aufweist, wobei die erste Oberfläche (3) und die zweite Oberfläche (4) durch Seitenflächen (5) miteinander verbunden sind, wobei jede der Seitenflächen (5) kleiner ist als jede der Oberflächen (3, 4), wobei zumindest eine der Oberflächen (3, 4) des Bandes (1) mit einer zumindest eine Schicht (6, 7) aufweisenden Beschichtung (8) beschichtet ist, **dadurch gekennzeichnet, dass** in einem Schritt i) um einen zu bearbeitenden Bereich des Bandes (1) eine die Beschichtung (8) unterbrechende Vertiefung (9), insbesondere eine spaltoder lochförmige Vertiefung (9), erzeugt wird, die von einander gegenüberliegenden Abschnitten der zumindest einen Beschichtung (8) zumindest teilweise begrenzt wird, die Beschichtung zur Mitte der Vertiefung (9) hin abgeschrägt und/oder unter Bildung von jeweils eine Oberseite und an diese anschließende Stirnseiten aufweisenden Stufen abgestuft wird, wobei im Fall eines Abstufens ein Niveau der Oberseiten der Stufen bezogen auf die Oberfläche (3) des Bandkörpers (2) von einem Rand der Vertiefung (9) zu einer Mitte der Vertiefung (9) hin abnimmt, wobei nach Bearbeitung des Bandes (2) in dem zu bearbeitenden Bereich in einem Schritt ii) die Vertiefung (9) mit zumindest einem gleichartigen Material (8a) wie jenes der zumindest einen Schicht (6, 7) der Beschichtung (8) zumindest teilweise aufgefüllt wird, wobei zum Auffüllen der Vertiefung (9) mit dem Material der Beschichtung ein Sprühverfahren verwenden wird.

2. Verfahren nach Anspruch 1, **dadurch gekennzeichnet, dass** der Bandkörper (2) aus Metall hergestellt ist.

3. Verfahren nach Anspruch 1 oder 2, **dadurch gekennzeichnet, dass** die Beschichtung (8) aus einem nichtmetallischen Material, insbesondere aus einem Kunststoff, beispielsweise einem Polytetrafluorethylen (PTFE), hergestellt ist.

4. Verfahren nach einem der Ansprüche 1 bis 3, **dadurch gekennzeichnet, dass** ein Boden (9) der Vertiefung (9) durch einen beschichtungsfreien Abschnitt der Oberfläche (3) des Bandkörpers (2) gebildet wird, wobei einander gegenüberliegende, die Vertiefung (9) zumindest teilweise begrenzende Abschnitte der Beschichtung (8) durch den beschichtungsfreien Abschnitt der Oberfläche (3) des Bandkörpers (2) voneinander getrennt sind.

5. Verfahren nach einem der Ansprüche 1 bis 4, **dadurch gekennzeichnet, dass** in Schritt i) die Beschichtung auf die Oberfläche (3) des Bandkörpers (2) aufgebracht wird, wobei an quer oder schräg zu den Seitenflächen verlaufenden, freien Enden (10, 11) des Bandkörpers (2) je ein Bereich der Oberfläche (3) des Bandkörpers (2), der auf einer Seite von je einem freien Enden (10, 11) des Bandkörpers (2) begrenzt wird, frei von der Beschichtung gehalten wird.

6. Verfahren nach Anspruch 5, **dadurch gekennzeichnet, dass** nach Schritt i) und vor Schritt ii) zur Herstellung der Vertiefung (9) Stirnkanten der beiden frei von der Beschichtung gehaltenen, freien Enden (10, 11) aneinander zum Anliegen gebracht und miteinander verbunden werden, wodurch der Bandkörper (2) zu dem Endlosband verbunden wird.

7. Verfahren nach Anspruch 6, **dadurch gekennzeichnet, dass** die beiden freien Enden (10, 11) miteinander unter Bildung einer Schweißnaht (12) verschweißt werden.

8. Verfahren nach einem der Ansprüche 1 bis 7, **dadurch gekennzeichnet, dass** zwischen Schritt i) und Schritt ii) die Beschichtung unter Bildung zumindest einer Schrägfläche und/oder von Stufen abgetragen wird, bis die Oberfläche (3) des Bandkörpers (2) frei liegt, und hierauf der Bandkörper (2), insbesondere durch Schleifen und/oder Herausschneiden von Teilen des Bandkörpers (2) und Einsetzen von Material in den Bandkörper (2), bearbeitet wird.

## Claims

1. A method for repairing or producing an endless belt made from a belt (1) with a belt body (2), wherein the belt body (2) has a first surface (3) and a second surface (4), wherein the first surface (3) and the second surface (4) are connected to each other by means of side surfaces (5), wherein each of the side surfaces (5) is smaller than each of the surfaces (3, 4), wherein at least one of the surfaces (3, 4) of the belt (1) is coated with a coating (8) having at least one layer (6, 7), **characterized in that** in a step i) a recess (9), in particular a gap-type or hole-type recess, interrupting the coating (8) is created around a region to be processed of the belt (1), which recess (9) is at least partially delimited by opposite sections of the at least one coating (8), wherein toward the middle of the recess (9), the coating is slanted and/or staggered, in each case forming one upper side and steps adjoining it and having front sides, wherein in the case of a staggering, a level of the upper sides of the steps decreases from an edge of the recess (9) towards a middle of the recess (9) with respect to the surface (3) of the belt body (2), wherein after processing the belt (2) in the region to be processed, in a step ii) the recess (9) is at least partially filled up with at least one material (8a) of the same type as the at least one layer (6, 7) of the coating (8), wherein a spraying method is used for filling up the recess (9) with the material of the coating.

2. The method according to claim 1, **characterized in that** the belt body (2) is made of metal.

3. The method according to claim 1 or 2, **characterized in that** the coating (8) is made from a non-metal material, in particular from a plastic material, for example a polytetrafluoroethylene (PTFE).

4. The method according to one of claims 1 to 3, **characterized in that** a bottom (9) of the recess (9) is formed by a coating-free section of the surface (3) of the belt body (2), wherein opposite sections of the coating (8) at least partially delimiting the recess (9) are separated from each other by the coating-free section of the surface (3) of the belt body (2).

5. The method according to one of claims 1 to 4, **characterized in that** in step i) the coating is applied to the surface (3) of the belt body (2), wherein at free ends (10, 11) of the belt body (2) extending transversely or obliquely to the side surfaces, one region each of the surface (3) of the belt body (2), which in each case, is delimited on one side by a free end (10, 11) of the belt body (2), is kept free of the coating.

6. The method according to claim 5, **characterized in that** after step i) and before step ii), for producing the recess (9), end edges of the two free ends (10, 11), which are kept free of the coating, are made to abut one another and are connected to each other, whereby the belt body (2) is connected to form the endless belt.

7. The method according to claim 6, **characterized in that** the two free ends (10, 11) are welded together, forming a weld seam (12).

8. The method according to one of claims 1 to 7, **characterized in that** between step i) and step ii), the coating is removed, forming at least a sloping surface and/or steps, until the surface (3) of the belt body (2) is exposed and on it, the belt body (2) is processed, in particular by grinding and/or cutting out parts of the belt body (2) and inserting material into the belt body (2).

## Revendications

1. Procédé de réparation ou de fabrication d'une bande sans fin à partir d'une bande (1) comprenant un corps de bande (2), le corps de bande (2) présentant une première surface (3) et une seconde surface (4), la première surface (3) et la seconde surface (4) étant reliées entre elles par des surfaces latérales (5), chacune des surfaces latérales (5) étant plus petite que chacune des surfaces (3, 4), au moins une des surfaces (3, 4) de la bande (1) étant revêtue d'un revêtement (8) présentant au moins une couche (6, 7), **caractérisé en ce que** dans une étape i), le revêtement est interrompu ou évidé dans une zone de la bande (1) à traiter, un creux (9) interrompant le revêtement (8), en particulier un creux (9) en forme de fente ou de trou, est produit, qui est au moins partiellement délimité par des sections mutuellement opposées d'au moins un revêtement (8), le revêtement est biseauté vers le centre du creux (9) et/ou est gradué en formant respectivement une face supérieure et des marches présentant des faces frontales adjacentes à celle-ci, un niveau des faces supérieures des marches, en cas de gradation par rapport à la surface (3) du corps de bande (2), diminuant d'un bord du creux (9) vers un centre de le creux (9), dans lequel, après le traitement de la bande (2) dans la zone à traiter dans une étape ii), le creux (9) est au moins partiellement rempli avec au moins un matériau (8a) similaire à celui de la au moins une couche (6, 7) du revêtement (8), dans lequel un procédé de pulvérisation est utilisé pour remplir le creux (9) avec le matériau du revêtement.

2. Procédé selon la revendication 1, **caractérisé en ce que** le corps de bande (2) est fabriqué en métal.

3. Procédé selon la revendication 1 ou 2, **caractérisé en ce que** le revêtement (8) est fabriqué en un matériau non métallique, en particulier en une matière plastique, par exemple en polytétrafluoroéthylène (PTFE).

4. Procédé selon l'une quelconque des revendications 1 à 3, **caractérisé en ce qu'**un sol (9) du creux (9) est formé par une section sans revêtement de la surface (3) du corps de bande (2), des sections opposées du revêtement (8), délimitant au moins partiellement le creux (9), étant séparées l'une de l'autre par la section sans revêtement de la surface (3) du corps de bande (2).

5. Procédé selon l'une quelconque des revendications 1 à 4, **caractérisé en ce qu'**à l'étape i), le revêtement est appliqué sur la surface (3) du corps de bande (2), une zone de la surface (3) du corps de bande (2), qui est délimitée d'un côté par une extrémité libre (10, 11) du corps de bande (2), étant maintenue libre du revêtement aux extrémités libres (10, 11) du corps de bande (2) s'étendant transversalement ou obliquement par rapport aux surfaces latérales.

6. Procédé selon la revendication 5, **caractérisé en ce qu'**après l'étape i) et avant l'étape ii), pour la fabrication du creux (9), des bords d'extrémité des deux extrémités libres (10, 11) maintenues libres du revêtement sont amenées en appui l'une contre l'autre et reliées l'une à l'autre, le corps de bande (2) étant ainsi relié à la bande sans fin.

7. Procédé selon la revendication 6, **caractérisé en ce que** les deux extrémités libres (10, 11) sont soudées l'une à l'autre en formant un cordon de soudure (12).

8. Procédé selon l'une quelconque des revendications 1 à 7, **caractérisé en ce qu'**entre l'étape i) et l'étape ii), le revêtement est enlevé en formant au moins une surface inclinée et/ou par étapes jusqu'à ce que la surface (3) du corps de bande (2) soit dégagée, puis le corps de bande (2) est usiné, en particulier par meulage et/ou découpe de parties du corps de bande (2) et insertion de matériau dans le corps de bande (2).
